# EUROPÄISCHE PATENTSCHRIFT

(11) **EP 1 123 255 B1**
(45) Veröffentlichungstag und Bekanntmachung des Hinweises auf die Patenterteilung: **06.11.2002**
(21) Anmeldenummer: 99947292.1
(22) Anmeldetag: 09.09.1999
(51) Int. Cl.: C01B 15/023, B01J 19/32, B01J 19/24, B01J 8/34, B01J 8/22, B01J 8/44, B01J 10/00, B01J 8/18

(54) **BLASENSÄULE UND DEREN VERWENDUNG**
BUBBLE COLUMN AND USE THEREOF
COLONNE A BULLES ET SON UTILISATION

(30) Priorität: 23.09.1998 DE 19843573
(43) Veröffentlichungstag der Anmeldung: 16.08.2001
(73) Patentinhaber: Degussa AG, 40474 Düsseldorf (DE)
(72) Erfinder: EICKHOFF, Hubertus, D-63755 Alzenau (DE); SCHÜTTE, Rüdiger, D-63755 Alzenau (DE)
(86) Internationale Anmeldenummer: EP9906626
(87) Internationale Veröffentlichungsnummer: WO00017098

(56) Entgegenhaltungen:
- DE-A- 2 634 785
- DE-A- 19 647 126
- GB-A- 879 539
- US-A- 3 853 986
- US-A- 4 391 675

## Beschreibung

Die Erfindung betrifft eine im Gegenstrom betreibbare Blasensäule mit im Mittelteil horizontal angeordneten gelochten Böden und deren Verwendung zur Durchführung von Gas-Flüssig-Reaktionen. Eine spezielle Verwendung richtet sich auf die Oxidationsstufe des Anthrachinonprozesses zur Herstellung von Wasserstoffperoxid.

Blasensäulen sind säulenförmige Behälter, in welchen ein Gas in Form von Blasen mit einer Flüssigkeit in Kontakt kommen, wobei meistens Substanzen von einer Phase in die andere Phase überführt werden. Blasensäulen werden demgemäß auch für chemische Reaktionen zwischen Komponenten in einer flüssigen und einer gasförmigen Phase eingesetzt. Um den Massentransport zwischen den Phasen zu intensivieren und Rückvermischungen zu vermindern, können in Blasensäulen auch mehrere gelochte Böden horizontal übereinander angeordnet werden (Ullmann's encyclopedia of industrial chemistry 5th ed. (1992), Vol. B4, 276-278).

Bei den gelochten Böden großtechnischer Blasensäulen, also solchen mit einem Durchmesser von mindestens 1 m, handelt es sich üblicherweise um Siebböden mit einem Lochdurchmesser zwischen 2 und 5 mm oder um Dual-Flow-Böden mit einem Lochdurchmesser bis 20 mm. Anstelle der Siebböden werden auch Roste mit einer darauf befindlichen dünnen Schicht eines üblichen Füllkörpers verwendet. Die Raum-Zeit-Ausbeute von Gas-Flüssig-Reaktionen ist stark vom Gasgehalt im durch die Säule strömenden Gas-Flüssig-Gemisch abhängig. Da der Gasgehalt unter Einsatz von Blasensäulen mit den genannten Siebböden über bestimmte Grenzwerte nicht gesteigert werden konnte, war die Raum-Zeit-Ausbeute hierdurch limitiert. Es fehlte daher nicht an Versuchen, durch andere Einbauten und/oder spezielles Eindüsen des Gases die Raum-Zeit-Ausbeute zu steigern. Durch die genannten anderen Einbauten, etwa Static-Mixer, wird allerdings der Aufbau der Blasensäule technisch aufwendiger.

Die DE 694 03 618 T2, eine Übersetzung der EP 0 659 474 B1, lehrt ein Verfahren zum In-Kontakt-Bringen eines Gasstromes mit einer flüssigen Phase und eine Vorrichtung hierfür. Die Vorrichtung umfaßt eine Kolonne mit gelochten Siebböden, wobei die Gesamtoberfläche der Perforationen zwischen 1/40 und 1/300 des für Perforationen verfügbaren Querschnitts liegt. Die Höhe der auf den Siebböden gehaltenen Flüssigkeitsschicht, welche beispielsweise mittels Wehren eingestellt wird, liegt vorzugsweise im Bereich von 200 bis 600 mm. Die Querschnittsfläche der einzelnen Perforationen liegt im Bereich von 0,5 bis 3,5 mm².

Die AT-PS 236 346 lehrt spezielle gelochte Böden für Kolonnen, wie sie für Destillations- und Absorptionsverfahren verwendet werden. Die Böden enthalten neben senkrechten Öffnungen zusätzlich eine geringe Zahl Öffnungen mit schräg zur Hauptfläche geneigten Wandungen. Die Querschnittsfläche der Öffnungen wird mit 0,155 bis 31,7 mm² angegeben, beispielsgemäß beträgt die Fläche 0,63 mm². Im Betrieb strömt über die Böden eine Flüssigkeit. Das Dokument lehrt nicht, die Kolonne als Blasensäule zu betreiben.

Die DE-AS 10 28 096 lehrt ein Verfahren zur kontinuierlichen Umsetzung von feinverteilten Festkörpern mit Flüssigkeiten und/oder Gasen. Eingesetzt wird eine im Gleichstrom betriebene ganz mit Flüssigkeit gefüllte Kolonne mit Siebböden, deren Löcher einen Durchmesser von kleiner 1 mm aufweisen. Ein Gaspolster hemmt den Durchtritt von Flüssigkeit. Die Kolonne weist keine Vorrichtungen zum Gegenstrombetrieb auf.

Der Blasensäulen-Kaskadenreaktor gemäß DE-OS 21 57 737 gleicht im wesentlichen dem zuvor gewürdigten Reaktor. Die gesamte freie Lochfläche beträgt vorzugsweise weniger als 5 % des Reaktorquerschnitts, und die beispielsgemäßen Lochdurchmesser betragen 2 bzw. 4 mm (= 0,78 bis 12,56 mm²). Hinweise zum Gegenstrombetrieb und Vorrichtungen hierzu sind dem Dokument nicht zu entnehmen.

Ein großtechnischer Prozess einer Gas-Flüssig-Reaktion ist die Oxidationsstufe im Anthrachinonverfahren (AO-Verfahren) zur Herstellung von Wasserstoffperoxid. Bekanntlich umfaßt dieses Verfahren eine Hydrierstufe, eine Oxidationsstufe und eine Extraktionsstufe - eine Übersicht vermittelt Ullmann's encyclopedia of industrial chemistry 5th ed. (1989), Vol. A13, 447-457. In der Hydrierstufe wird ein in einem Lösungsmittelsystem gelöster Reaktionsträger auf der Basis eines oder mehrerer 2-Alkylanthrachinone und/oder deren Tetrahydroderivaten teilweise zu den entsprechenden Hydrochinonen hydriert, und die in der hydrierten Arbeitslösung enthaltenden Hydrochinone werden in der Oxidationsstufe mit einem O₂ enthaltenden Gas, meistens Luft, unter Bildung von Wasserstoffperoxid wieder zu den Chinonen oxidiert. In der Oxidationsstufe soll die Umsetzung möglichst quantitativ unter Vermeidung von Abbaureaktionen von Komponenten der Arbeitslösung erfolgen, ferner soll sie möglichst energiesparend und mit hoher Raum-Zeit-Ausbeute durchführbar sein.

Die Oxidation wurde im AO-Verfahren zunächst in hintereinander geschalteten Begasungstürmen mit jeweils frischer Luft durchgeführt, was sowohl technisch aufwendig als auch wenig wirtschaftlich war. Unter Einhaltung bestimmter Blasengrößen, erhältlich durch feinporige Gasverteilerorgane, wie Fritten, und bestimmter Querschnittsbelastungen, konnte gemäß US-Patentschrift 3,073,680 zwar die Oxidationsgeschwindigkeit erhöht werden, Probleme entstanden aber bei der Abscheidung des entstehenden Schaums und der Gas-Flüssig-Phasentrennung.

Gemäß DE-Patentschrift 20 03 268 lassen sich die zuvor genannten Probleme des AO-Verfahrens mittels einer in zwei bis sechs Sektionen unterteilten Oxidationskolonne lösen. In jeder Sektion dieser Kolonne werden die Arbeitslösung und das Oxidationsgas im Gleichstrom von unten nach oben geführt werden, von der Gesamtkolonne aus gesehen bewegten sich aber Gas und Flüssigkeit im Gegenstrom zueinander. Zur innigen Durchmischung enthalten die einzelnen Sektionen geeignete Einbauten, wie Siebböden oder Netze, oder sie sind mit Füllkörpern gefüllt.

Im Bestreben, den Druckverlust der zuvor beschriebenen kaskadenförmigen Anordnung der Kolonne zu mindern, wird in der EP-Patentschrift 0 221 931 vorgeschlagen, die Oxidation in einem rohrförmigen Gleichstromreaktor, der außer einem speziellen Gasverteilerorgan keine Einbauten aufweist, durchzuführen. Durch das Gasverteilerorgan entstehen aus der Arbeitslösung und dem Oxidationsgas ein koaleszenzgehemmtes System mit einem hohen Gasanteil. Bei zu hohem Gasanteil und/oder besonders kleinen Gasblasen können Probleme bei der Gas-Flüssig-Trennung auftreten. Wie sich in der Praxis zeigte, ist bei diesem Verfahren das zu begasende spezifische Reaktorvolumen (m³ pro t H₂O₂) recht groß, und dies führt zu einer niedrigeren Raum-Zeit-Ausbeute und zudem zu einem hohen hold-up an teurer Arbeitslösung.

Die Aufgabe der vorliegenden Erfindung besteht in der Bereitstellung einer gelochte Böden umfassenden, im Gegenstrom betreibbaren Blasensäule, womit Gas-Flüssig-Reaktionen mit höherer Raum-Zeit-Ausbeute durchgeführt werden können als unter Verwendung von Säulen mit üblichen Siebböden. Die Blasensäule sollte einen einfachen Aufbau aufweisen. Eine weitere Aufgabe richtet sich auf die Verwendung der Blasensäule in der Oxidationsstufe des AO-Verfahrens zur Herstellung von Wasserstoffperoxid, wobei der Umsatz gegenüber vorbekannten Verfahren verbessert und die auf das Reaktorvolumen und das Arbeitslösungsvolumen bezogene Raum-Zeit-Ausbeute erhöht und die Bildung eines schwer trennbaren Gas-Flüssigkeits-Gemischs vermieden werden sollten.

Gelöst wird die Aufgabe durch eine Blasensäule, umfassend einen säulenförmigen Behälter (1) mit Sumpf- (3), Mittel-(2) und Kopfteil (4), eine oder mehrere im Mittelteil horizontal angeordnete gelochte Böden (5) mit über den Querschnitt der Säule im wesentlichen gleichmäßiger Lochverteilung, Vorrichtungen zum Zu- und Abführen einer flüssigen (9 und 10) sowie einer Gasphase (11 und 12) zum Betreiben der Blasensäule im Gegenstrom, die dadurch gekennzeichnet ist, daß die Querschnittsfläche der einzelnen Löcher 0,003 bis 3 mm² und die offene Fläche der Böden 2 bis 20 % beträgt und die im Betriebszustand jeweils über und unter einem Boden gebildeten Flüssigkeitszonen über eine Vorrichtung (6) für den Flüssigkeitsdurchlaß miteinander in Verbindung stehen. Die Unteransprüche richten sich auf bevorzugte Ausführungsformen der Blasensäule.

Gegenüber Blasensäulen mit konventionellen Siebböden sind die erfindungsgemäßen Blasensäulen durch Feinloch- oder Feinschlitzböden gekennzeichnet. Die Böden enthalten vorzugsweise Löcher mit einer Querschnittsfläche von 0,01 bis 1 mm², insbesondere 0,05 bis 0,5 mm². Die offene Fläche liegt vorzugsweise im Bereich von 3 bis 15 %, insbesondere 3 bis 10 % und besonders bevorzugt 3 bis 7 %. Die Form der Löcher ist beliebig, üblicherweise sind die Löcher aber rund, dreieckförmig bis halbelliptisch oder schlitzförmig. Die Feinloch- oder Feinschlitzböden können per se als Säulenboden ausgebildet sein, üblicherweise bestehen sie aber aus einem Unterstützungsrost und einem darauf fixierten Feinloch- oder Feinschlitzblech der gewünschten Blechstärke und Lochung. Derartige Feinloch- oder Feinschlitzbleche werden zwar in der Sieb- und Filtertechnik sowie als Fluidisierungsboden in der Wirbelschichttechnologie eingesetzt, deren Verwendung für Böden in Blasensäulen wurde bisher aber nie in Betracht gezogen.

Herstellungsbedingt sind die Löcher bevorzugter Bleche in Durchgangsrichtung des Gases konisch ausgebildet und/oder die Löcher sind zum Erhalt einer gerichteten Strömung im Durchgang schräggestellt; zusätzlich kann eine gerichtete Strömung durch die herstellungsbedingt auf der Oberfläche des Blechs befindlichen Schuppen bewirkt werden.

Die Blasensäule wird durch die fein gelochten Böden in mehrere Zonen unterteilt, welche im Betriebszustand im Mittelteil der Blasensäule mit Ausnahme eines dünnen Gaspolsters unmittelbar unter den Böden mit Flüssigkeit beziehungsweise dem Flüssigkeits-Gas-Gemisch gefüllt sind. Damit im Gegenstrombetrieb ein störungsfreier Betrieb gewährleistet ist, umfaßt die Blasensäule je Boden mindestens einen rohr- oder schachtförmigen Flüssigkeitsdurchlaß (6) zwischen benachbarten Zonen, sogenannte Downcomer. Diese Durchlässe, die zweckmäßigerweise unmittelbar am Boden beginnen, also kein Wehr erforderlich machen, tauchen in die Flüssigkeit der unter dem jeweiligen Boden liegenden Zone ein oder sind damit verbunden. Sie sind so ausgestaltet, daß sie im Betriebszustand nicht vom Gas durchströmt werden. Dies gelingt beispielsweise dadurch, daß die Downcomer in Form von an den gelochten Böden angeordneten runden Rohren oder segmentförmigen Schächten mit entsprechendem freien Querschnitt zweckmäßigerweise in eine Abtauchtasse münden. Alternativ können als Downcomer auch außenliegende, jeweils zwei benachbarte Zonen verbindende Rohre verwendet werden.

Der Bodenabstand in der erfindungsgemäßen Blasensäule ist abhängig von der spezifischen Problemstellung und Durchmesser zu Höhenverhältnis der Blasensäule. Der Bodenabstand liegt im allgemeinen im Bereich des 0,1- bis 10-fachen, insbesondere 0,5- bis 5-fachen des Bodendurchmessers. In großtechnischen Blasensäulen, wie sie beispielsweise in der erfindungsgemäßen Verwendung zur Herstellung von Wasserstoffperoxid eingesetzt werden, liegt der Bodenabstand der Feinloch- oder Feinschlitzböden zweckmäßigerweise im Bereich des 0,5- bis 2-fachen Bodendurchmessers.

Außer den genannten Böden, welche bei Gegenstrombetrieb vorzugsweise mit jeweils mindestens einem rohr- oder schachtförmigen Flüssigkeitsdurchlass versehen sind, kann der Mittelteil der Säule frei von Einbauten sein. Gemäß einer bevorzugten Ausführungsform ist es aber auch möglich, zwischen einzelnen Böden Wärmeaustauscher anzuordnen, zweckmäßigerweise Plattenwärmeaustauscher mit senkrecht gestellten Platten. Derart mit Feinlochböden und Wärmeaustauschern ausgestattete Blasensäulen lassen sich besonders zweckmäßig zur Durchführung von Gas-Flüssigkeits-Reaktionen mit hoher Reaktionsenthalpie verwenden. Die erfindungsgemäßen Blasensäulen können in dem Fachmann geläufiger Weise für den Betrieb im Gleich- oder Gegenstrom, bevorzugt im Gegenstrom, ausgestattet werden. Auch eine kaskadenförmige Ausgestaltung ist möglich.

Wie aus den erfindungsgemäßen Beispielen und Vergleichsbeispielen ersichtlich ist, werden durch die erfindunsgemäße Ausgestaltung der gelochten Böden in der Blasensäule außergewöhnliche, nicht vorhersehbare Vorteile erzielt:
- die Begasung der über den Feinloch- oder Feinschlitzblechen stehenden Flüssigkeit ist äußerst gleichmäßig;
- es werden gleichmäßig über den gesamten Querschnitt der Blasensäule kleine Blasen mit einem engen Durchmesserspektrum erzeugt;
- die Effizienz des durch die Böden bewirkten intensiven Stoffaustauschs gestattet es, das spezifische Begasungsvolumen (= wirksames Reaktorvolumen) gegenüber Blasensäulen mit Siebböden zu erniedrigen;
- der in der Praxis erzielbare Gasgehalt im Gas-Flüssigkeits-Gemisch liegt deutlich über den Gasgehalten, wie sie beim Einsatz konventioneller Siebböden sowie anderer Begasungstechniken erhältlich sind, ohne dass es zu Problemen bei der Gas-Flüssig-Phasentrennung kommt;
- die erzeugte Stoffaustauschfläche und damit erreichte Stoffaustausch ist sehr hoch;
- der hold-up der flüssigen Phase ist gegenüber konventionellen Säulen stark reduziert, was insbesondere dann ein großer Vorteil ist, wenn die flüssige Phase ein teures Mehrstoffgemisch ist, etwa die Arbeitslösung des AO-Verfahrens;
- pro m³ Reaktorvolumen wird ein höherer Reaktionsumsatz erzielt als bei konkurrierenden Verfahren;
- pro m³ flüssige Phase (z.B. die Arbeitslösung im AO-Verfahren) wird ein höherer Reaktionsumsatz erzielt;
- der Druckverlust der Böden ist mit etwa 300 bis 500 Pa (3-5 mbar) pro Boden gering gegenüber dem hydrostatischen Druckverlust der Säule; unter den Böden bildet sich ein Gaspolster von nur 1 bis 5 cm aus, so daß das Apparatevolumen (= mittlerer Teil der Säule) praktisch vollständig für die Reaktion ausgenutzt werden kann.

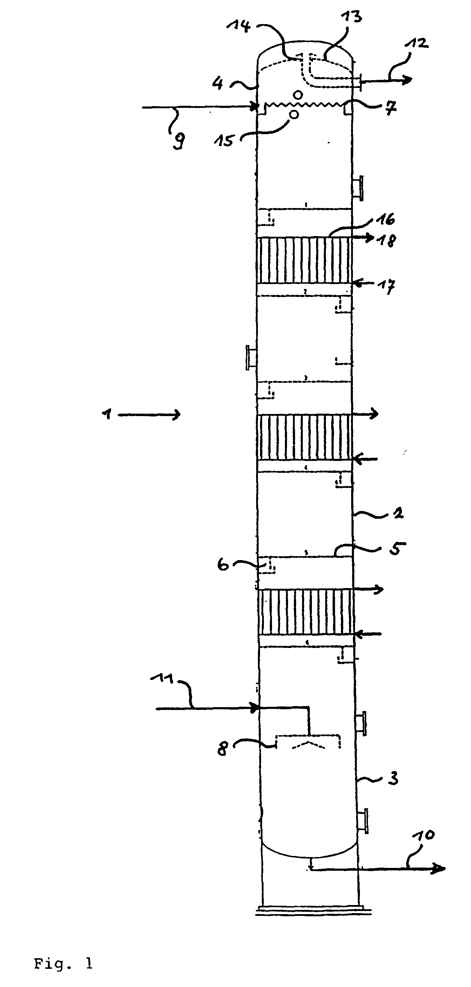

Die Figur zeigt ein Schema einer bevorzugten für einen Gegenstrombetrieb besonders geeigneten erfindungsgemäßen Blasensäule 1, welche in ihrem Mittelteil 2 außer sechs Feinlochböden 5 drei Wärmeaustauscher 16 enthält. Die Säule umfaßt außer dem begasten Mittelteil 2 einen Sumpfteil 3 mit einer glockenförmigen Gasverteilervorrichtung 8 und einem Kopfteil 4 mit einer Vorrichtung 7 zum Verteilen der flüssigen Phase und einer Gas-Flüssig-Trennvorrichtung 13 in Verbindung mit 14. An jedem Feinlochboden ist segmentförmig ein schachtförmiges Element 6 für den Flüssigkeitsdurchtritt in die unter dem Boden liegende Zone angeordnet. Die_ flüssige Phase wird über Leitung 9 am Kopf der Säule zugeführt und über Leitung 10 am Sumpfteil abgeführt. Das Gas wird über Leitung 11 der Gasverteilervorrichtung 8, aus welcher feine Gasblasen austreten, zugeführt und nach Passage der Säule in der Gastrennvorrichtung - hier schematisch als Zentrifugalabscheider ausgebildet - von der Flüssigkeitsphase getrennt und über Leitung 12 als Abgas abgeführt. Eine Kontrolle, ob im Bereich des Säulenkopfes gegebenenfalls Schäume auftreten, ist durch die Schaugläser 15 möglich. Die Zu- 17 und Ableitung 18 jedes Wärmetauschers versorgen und entsorgen diesen mit einem Wärmeträgermedium.

Sumpf- und Kopfteil der Blasensäule können in beliebiger Weise ausgeführt werden. Insbesondere können übliche Aggregate zum Zuführen eines Gases und einer Flüssigkeit sowie zur Phasentrennung eingebaut werden.

Die erfindungsgemäße Blasensäule läßt sich zur Durchführung von Reaktionen zwischen einer Komponente einer Gasphase und einer Komponente einer Flüssigphase verwenden. Bei diesen Gas-Flüssig-Reaktionen kann es sich beispielsweise um Oxidations-, Reduktions-, Additions- oder Neutralisationsreaktionen handeln, wobei die flüssige Phase wäßrig oder organisch sein kann. Bei der Reaktion können die beiden Phasen im Gleichstrom oder Gegenstrom, vorzugsweise im Gegenstrom, in der Blasensäule miteinander in Kontakt gebracht werden. Hierbei können auch mehrere Blasensäulen kaskadenförmig hintereinander geschaltet werden. In der flüssigen Phase kann außer einer oder mehreren Reaktionskomponenten zusätzlich ein Katalysator in gelöster oder suspendierter Form enthalten sein. Bei in der flüssigen Phase suspendierten Stoffen muß deren Teilchendurchmesser wesentlich kleiner sein als der Durchmesser der Löcher der Feinloch- oder Feinschlitzböden.

Gemäß einer bevorzugten Verwendung wird die erfindungsgemäße Blasensäule in der Oxidationsstufe des Anthrachinonprozesses zur Herstellung von Wasserstoffperoxid eingesetzt. Hierbei ist die flüssige Phase eine hydrierte Arbeitslösung, welche einen oder mehrere Reaktionsträger aus der Reihe der 2-Alkylanthrahydrochinone und 2-Alkyltetrahydroanthrahydrochinone enthält, und die Gasphase ein sauerstoffhaltiges Gas, wie Luft, Sauerstoff oder ein Sauerstoff-Luft-Gemisch. Zur Oxidation werden die beiden Phasen bevorzugt im Gegenstrom geführt, wobei die Gasphase mittels einer im Sumpfteil der Blasensäule angeordneten üblichen Gasverteilervorrichtung, beispielsweise einer perforierten Glocke, und die flüssige Phase im Kopfteil mittels einer üblichen Flüssigkeitsverteilervorrichtung zugeführt wird. Die Flüssigkeitsverteilung erfolgt vorzugsweise durch Berieselung eines wesentlichen Teils des Säulenquerschnitts. Diese Fahrweise ermöglicht es, Schaumprobleme am Kopf der Blasensäule, wie sie bei Verwendung anderer Blasensäulen, insbesondere der im Stand der Technik beschriebenen kaskadenförmig angeordneten Säulen auftreten und zu Verlusten an Arbeitslösung durch Austrag derselben mit dem Oxidationsabgas führen können, zuverlässig zu vermeiden.

Durch Verwendung einer erfindungsgemäßen Blasensäule mit integrierten Wärmeaustauscherplatten ist es ferner möglich, die Oxidationsstufe annähernd isotherm durchzuführen. Dies wirkt sich positiv auf den Reaktionsumsatz aus. Desweiteren entfällt hiermit ein Herausführen der Arbeitslösung aus der Oxidation zwecks externer Abkühlung. Wie sich aus den nachfolgenden Beispielen und Vergleichsbeispielen ergibt, wird im Verfahren zur Herstellung von Wasserstoffperoxid unter Verwendung einer erfindungsgemäßen Blasensäule in der Oxidationsstufe eine wesentlich höhere Raum-Zeit-Ausbeute erzielt. Diese Steigerung wurde möglich, obgleich sogar bei niedriger Temperatur und geringerem Druck gearbeitet wurde - unter gleichen Druck- und Temperaturbedingungen ist damit eine weitere Steigerung der Raum-Zeit-Ausbeute (RZA) möglich. Alternativ zur Steigerung der Raum-Zeit-Ausbeute oder in Ergänzung hierzu kann der Aufwand für die Verdichtung der Oxidationsluft minimiert und damit Energie eingespart werden.

Außer als Reaktionskolonnen lassen sich die Blasensäulen mit erfindungsgemäßen Trennböden auch für Rektifikations-, Absorptions- und Desorptionsprozesse verwenden. Aufgrund der gleichmäßigen Gasverteilung, kleiner Blasen und bei Bedarf gerichteter Gasströme aus den feinen Löchern der Feinlochböden sind sehr gute Stoffübergänge und hohe Belastungsbereiche möglich.

### Beispiele 1 bis 3

Durchgeführt wurde die Oxidationsstufe des Anthrachinonprozesses zur Herstellung von Wasserstoffperoxid in einer großtechnischen Anlage unter Verwendung einer erfindungsgemäßen Blasensäule gemäß Figur und Einsatz von Luft als Oxidationsgas. Die Arbeitslösung (AL) enthielt als Reaktionsträger ein aus mehrjährigem Betrieb stammendes Gemisch auf der Basis von 2 Ethyl- und 2-Amylanthrachinon sowie deren Tetrahydroanthrachinonen in einem Lösungsmittelgemisch auf der Basis von im wesentlichen einem Aromatenbenzin und Tetrabutylharnstoff.

Die Blasensäule umfaßte sechs Feinlochböden mit einer Querschnittsfläche von etwa 0,05 mm²/Loch und einer offenen Fläche von etwa 5 %, drei Plattenwärmeaustauscher, eine glockenförmige perforierte Gasverteilervorrichtung, eine Berieselungsvorrichtung am Kopf der Säule und eine Zentrifugaltrennvorrichtung zur Phasentrennung am Kopf der Säule.

Wesentliche Betriebsdaten und Ergebnisse der Beispiele 1 und 2 folgen aus der Tabelle 1. Daten zu Beispiel 3 entstammen einem Bilanzierungsversuch und sind der Tabelle 2 im Vergleich zu den entsprechenden Daten der Vergleichsbeispiele zu entnehmen.

**Tabelle 1:**

| | Beispiel 1 | Beispiel 2 |
|---|---|---|
| Volumenstrom AL in die Oxidation (m³ AL pro h und m³ begastes Reaktorvolumen) | 1,64 | 1,63 |
| Volumenstrom Oxidationszuluft (m³_{N} pro h und m³ begastes Reaktorvolumen) | 72,6 | 75,4 |
| Temperatur (°C) der AL in der Säule: | | |
| Eingang | 51,2 | 52,5 |
| Mitte | 51,2 | 52,5 |
| Ausgang | 51,2 | 52,5 |
| Überdruck der Oxidationszuluft (bar ü) | 2,72 | 2,26 |
| O₂ im Abgas (Vol.-%) | 5,6 | 6,3 |
| H₂O₂-Äquivalent in der AL vor der Oxidation (g/l) | 11,45 | 11,54 |
| H₂O₂ in der AL nach der Oxidation | 11,34 | 11,30 |

### Vergleichsbeispiel 1

Die Oxidation einer hydrierten Arbeitslösung wurde in einer Anlage gemäß EP-B 0 221 931 durchgeführt, das heißt, das Oxidationsgas und die Arbeitslösung wurden direkt mittels eines Mischorgans gemischt und in den Sumpfteil einer einbautenfreien Kolonne als koaleszenzgehemmtes System eingeführt; die betriebliche Arbeitslösung enthielt einen Reaktionsträger auf der Basis von 2-Ethylanthrachinon und 2-Ethyltetrahydroanthrachinon in einem Lösungsmittelgemisch auf der gleichen Basis wie in Beispiel 1.

Wesentliche Betriebsdaten und die auf 1 m³ Arbeitslösung bezogene Raum-Zeit-Ausbeute folgen aus der Tabelle 2. Der Gasgehalt und die Raum-Zeit-Ausbeuten des Gas-Flüssig-Gemischs waren niedriger als im erfindungsgemäßen Beispiel.

### Vergleichsbeispiel 2

In einer dreistufigen Kaskade gemäß DE 20 03 268 wurde eine Arbeitslösung analog jener des Vergleichsbeispiels 1 mit Luft oxidiert. Jede der drei Blasensäulen enthielt im mittleren Teil der Säule einen Siebboden mit einem Lochdurchmesser von 3 mm. Die wesentlichen Betriebsdaten und die Raum-Zeit-Ausbeuten folgen aus der Tabelle 2. Der Gasgehalt und die RZA waren niedriger als im erfindungsgemäßen Beispiel.

**Tabelle 2:**

| Vergleichsdaten aus Bilanzierungsversuchen einer erfindungsgemäßen Oxidation (Beispiel 3) sowie Oxidation unter Verwendung einer Blasensäule gemäß Vergleichsbeispiel 1 sowie einer 3-stufigen Kaskade gemäß Vergleichsbeispiel 2 | | | |
|---|---|---|---|
| | Beispiel 3 | Vergleichsbeispiel 1 | Vergleichsbeispiel 2 |
| spezifisches begastes Volumen (1) pro (jato) H₂O₂-Kapazität | 6,5 | 9,1 | 7,5 |
| Druck im Sumpfteil (Gaseintritt) (bar) Überdruck | 2,7 | 2,8 | 2,9 |
| Temperatur (°C) der AL am Ausgang | 51 | 59 | 56 |
| Gasgehalt (%) im Gas-Flüssig-Gemisch | 50 | 45 | 41 |
| Rest O₂ (Vol.-%) | 5,6 | 6,5-7 | 6,5-7 |
| Raum-Zeit-Ausbeute kg H₂O₂/h^{·}m³ Reaktor | 18,2 | 13,0 | 15,9 |
| kg H₂O₂/h^{·}m³ AL | 36,0 | 23,9 | 27,0 |

## Patentansprüche

1. Blasensäule, umfassend einen säulenförmigen Behälter (1) mit Sumpf- (3), Mittel- (2) und Kopfteil (4), eine oder mehrere im Mittelteil horizontal angeordnete gelochte Böden (5), deren offene Fläche 3 bis 20 % beträgt, Vorrichtungen zum Zu- und Abführen einer flüssigen (9 und 10) sowie einer Gasphase (11 und 12) zum Betreiben der Blasensäule im Gegenstrom,
**dadurch gekennzeichnet,**
**dass** die gelochten Böden über den Querschnitt der Säule im wesentlichen eine gleichmäßige Lochverteilung aufweisen, die Querschnittsfläche der einzelnen Löcher 0,003 bis 3 mm² beträgt und jeweils die über und unter einem Boden befindliche Zone über mindestens einen Downcomer (6) für den Flüssigkeitsdurchlaß miteinander in Verbindung stehen, wobei der Downcomer als am Boden angeordnetes rundes Rohr oder segmentförmiger Schacht oder als zwei benachbarte Zonen verbindendes außenliegendes Rohr derart ausgebildet ist, dass er im Betriebszustand nicht vom Gas durchströmt wird.

2. Blasensäule nach Anspruch 1,
**dadurch gekennzeichnet,**
**daß** die Löcher eine Querschnittsfläche von 0,01 bis 0,5 mm² und die offene Fläche der Böden 3 bis 7 % beträgt.

3. Blasensäule nach Anspruch 1 oder 2,
**dadurch gekennzeichnet,**
**dass** jeder Boden mit mindestens einem unmittelbar am Boden beginnenden und in eine Abtauchtasse mündenden rohr- oder schachtförmigen Flüssigkeitsdurchlaß in die darunter liegende Zone ausgestattet ist.

4. Blasensäule nach Anspruch 3,
**dadurch gekennzeichnet,**
**daß** die Löcher in der Durchgangsrichtung konisch ausgebildet und/oder zum Zweck des Erhalts einer gerichteten Strömung schräggestellt sind.

5. Blasensäule nach einem der Ansprüche 1 bis 4,
**dadurch gekennzeichnet,**
**daß** die Löcher rund, dreieckförmig bis halb elliptisch oder schlitzförmig ausgebildet sind.

6. Blasensäule nach einem der Ansprüche 1 bis 5,
**dadurch gekennzeichnet,**
**daß** der Bodenabstand im begasten Säulenmittelteil im Bereich des 0,1- bis 10-fachen, insbesondere 0,5- bis 5-fachen, Bodendurchmessers liegt.

7. Blasensäule nach einem der Ansprüche 1 bis 6,
**dadurch gekennzeichnet,**
**daß** im Mittelteil der Säule ein oder mehrere Wärmeaustauscher, insbesondere Plattenwärmeaustauscher, mit senkrecht gestellten Platten angeordnet sind.

8. Verwendung der Blasensäule gemäß einem der Ansprüche 1 bis 7 zur Durchführung von Gas-Flüssig-Reaktionen, wobei das Gas und die Flüssigkeit im Gegenstrom durch die Säule geleitet werden.

9. Verwendung nach Anspruch 8,
**dadurch gekennzeichnet,**
**daß** es sich bei der Gas-Flüssig-Reaktion um die Oxidationsstufe des Anthrachinonprozesses zur Herstellung von Wasserstoffperoxid handelt, wobei die flüssige Phase eine hydrierte Arbeitslösung und die Gasphase ein sauerstoffhaltiges Gas, insbesondere Luft, ist.

10. Verwendung nach Anspruch 9,
**dadurch gekennzeichnet,**
**daß** das O₂-haltige Gas mittels einer im Sumpfteil der Blasensäule angeordneten Gasverteilervorrichtung, insbesondere einer perforierten Glocke, und die Arbeitslösung im Kopfteil der Blasensäule mittels einer Flüssigkeitsverteilervorrichtung zugeführt werden.

## Claims

1. A bubble column comprising a column-shaped container (1) with base (3), middle (2) and head (4) sections, one or more perforated plates (5) arranged horizontally in the middle section, the open area of these being 3 to 20 %, devices for the supply and removal of a liquid (9 and 10) and of a gas phase (11 and 12) for operating the bubble column in counterflow,
**characterised in that**
the perforated plates have a substantially uniform distribution of perforations over the cross-section of the column, the cross-sectional area of the individual perforations is 0.003 to 3 mm² and each of the zones found above and below a plate are connected to each other via at least one downcomer (6) for the passage of liquid, wherein the downcomer is designed as a round tube or segmented shaft located on the plate or as an externally sited tube connecting two adjacent zones in such a way that gas does not flow through it in the operational state.

2. A bubble column according to Claim 1,
**characterised in that**
the perforations have a cross-sectional area of 0.01 to 0.5 mm² and the open area of the plates is 3 to 7 %.

3. A bubble column according to Claim 2,
**characterised in that**
the perforations are designed to be conical in the direction of passage and/or are angled for the purpose of maintaining a directed flow.

4. A bubble column according to Claim 1 or 2,
**characterised in that**
each plate is provided with at least one tubular or shaft-shaped passage for liquid in the zone lying underneath it, this starting directly at the plate and opening into a submerged cup.

5. A bubble column according to one of Claims 1 to 4,
**characterised in that**
the perforations are round, triangular to semi-elliptical or slit-shaped.

6. A bubble column according to one of Claims 1 to 5,
**characterised in that**
the plate spacing in the aerated middle section of the column is in the range 0.1 to 10 times, in particular 0.5 to 5 times the diameter of a plate.

7. A bubble column according to one of Claims 1 to 6,
**characterised in that**
one or more heat exchangers, in particular plate heat exchangers with vertical plates, are located in the middle section of the column.

8. Use of the bubble column according to one of Claims 1 to 7 to perform gas/liquid reactions, wherein the gas and the liquid are passed in counterflow through the column.

9. Use according to Claim 8,
**characterised in that**
the gas/liquid reaction is the oxidation step in the anthraquinone process for preparing hydrogen peroxide, wherein the liquid phase is a hydrogenated working solution and the gas phase is an oxygen-containing gas, in particular air.

10. Use according to Claim 9,
**characterised in that**
the O2-containing gas is supplied by means of a gas distributor device, in particular a perforated bell, located in the base section of the bubble column and the working solution is supplied by means of a liquid distributor device in the head section of the bubble column.

## Revendications

1. Colonne à bulles comprenant un récipient en forme de colonne (1) avec une partie de fond (3), une partie médiane (2) et une partie de tête (4), un ou plusieurs planchers horizontaux (5) montés dans la partie médiane percés de trous représentant une surface ouverte de 3 à 20 % de la surface des planchers, des dispositifs pour amener et évacuer une phase liquide (9 et 10) ainsi qu'une phase gazeuse (11 et 12) circulant à contre-courant l'une de l'autre,
**caractérisée en ce que**
- les planchers perforés présentent sur la section de la colonne une répartition essentiellement régulière des trous qui individuellement ont une section allant de 0,003 à 3 mm², et
- les zones situées de part et d'autre de chaque plancher sont reliées par au moins un « downcomer » (6) servant de passage au liquide, le downcormer ayant la forme d'un tube ronde monté sur le plancher ou d'un puits ou d'un tube situé à l'extérieur et reliant deux zones voisines, de manière à ne pas être traversé par le gaz quand la colonne est en fonctionnement.

2. Colonne à bulles selon la revendication 1,
**caractérisée en ce que**
les trous ont une surface de section allant de 0,01 à 0,5 mm² et couvrent 3 à 7 % de la surface du plancher.

3. Colonne à bulles selon la revendication 3,
**caractérisée en ce que**
chaque plateau comporte, dans la zone située en dessous de lui au moins un passage de liquide en forme de tube ou de puits, commençant directement sur le plancher et débouchant dans une tasse d'immersion.

4. Colonne à bulles selon la revendication 3,
**caractérisée en ce que**
les trous ont une forme conique dans le sens du passage et/ou sont inclinés pour maintenir un écoulement orienté.

5. Colonne à bulles selon l'une quelconque des revendications 1 à 4,
**caractérisée en ce que**
les trous ont une forme ronde, triangulaire ou allant jusqu'à la demi-ellipse, ou ont la forme de fentes.

6. Colonne à bulles selon l'une quelconque des revendications 1 à 5,
**caractérisée en ce que**
l'espacement des planchers, dans la zone médiane de la colonne balayée par les gaz est de 0,1 à 10 fois, en particulier 0,5 à 5 fois, le diamètre des planchers.

7. Colonne à bulles selon l'une quelconque des revendications 1 à 6,
**caractérisée en ce que**
dans la partie médiane de la colonne sont disposés un ou plusieurs échangeurs thermiques, en particulier des échangeurs à plaques, dont les plaques sont verticales.

8. Utilisation de la colonne à bulles selon l'une quelconque des revendications 1 à 7, pour effectuer des réactions gaz-liquide, le gaz et le liquide traversant la colonne à contre-courant l'un de l'autre.

9. Utilisation selon la revendication 8,
**caractérisée en ce qu'**
il s'agit de la réaction gaz-liquide à l'étape d'oxydation du procédé à l'anthraquinone de fabrication de l'eau oxygénée, la phase liquide étant une solution de travail hydrogénée et la phase gazeuse un gaz contenant de l'oxygène, en particulier de l'air.

10. Utilisation selon la revendication 9,
**caractérisée en ce que**
le gaz contenant de l'oxygène est amené par l'intermédiaire d'un dispositif répartiteur de gaz disposé dans la partie de fond de la colonne à bulles, en particulier une cloche perforée, et la solution de travail est amenée à la partie de tête de la colonne à bulles par l'intermédiaire d'un dispositif répartiteur de liquide.
